# EUROPEAN PATENT APPLICATION

(11) **EP 4 250 642 A1**
(43) Date of publication of application: **27.09.2023**
(21) Application number: 23159926.7
(22) Date of filing: 03.03.2023
(51) Int. Cl.: H04L 9/40, H04W 4/70, H04W 76/11, G06F 21/44, H04W 12/065, H04W 12/08

(54) **INTERNET-OF-THINGS SYSTEM AND CONNECTION SETTING METHOD THEREOF**

(30) Priority: 24.03.2022 TW 111111194
(71) Applicant: C&L Consulting Inc., Taipei City 105020 (TW); Columbia AloT Technologies Co., Ltd., New Taipei City 247018 (TW)
(72) Inventor: CHENG, FU-CHIUNG, NEW TAIPEI CITY (TW); LIU, WEI-CHENG, 105020 Taipei City (TW); WANG, DAI-XIN, 105020 Taipei City (TW)
(74) Representative: Meissner Bolte Partnerschaft mbB

(57) **Abstract**

An Internet of Things (IoT) system includes an application server, an identification information server, a gateway, and a terminal electronic device. The identification information server is configured to generate a plurality of pieces of first identification information, and each piece of first identification information is time-sensitive. The gateway is connected to the application server and stores the pieces of first identification information. The gateway is configured to automatically determine a piece of valid identification information from the pieces of first identification information. The terminal electronic device stores the pieces of first identification information and is configured to automatically and successively select a piece of current identification information from the pieces of first identification information to establish a connection with the gateway. When the current identification information is consistent with the valid identification information, the gateway establishes the connection with the terminal electronic device.

## Description

### BACKGROUND OF THE INVENTION

The present disclosure relates to an Internet of Things (IoT) system and a connection setting method thereof. More specifically, the present disclosure relates to an IoT system with an automatic and secure connection and a connection setting method thereof.

According to the Bluetooth specification, Bluetooth apparatuses include central apparatuses and peripheral apparatuses. A peripheral apparatus may send out an advertising packet, and a nearby central apparatus may transmit a request for connection to the peripheral apparatus after receiving the advertising packet of the peripheral apparatus. If the peripheral apparatus agrees with the request for connection, then the peripheral apparatus establishes a Bluetooth connection with the central apparatus. For the sake of security, the existing Bluetooth specification provides several methods for verifying whether a peripheral apparatus has established a Bluetooth connection with the right central apparatus, and vice versa (i.e., Bluetooth pairing), such as Numeric Comparison, Passkey Entry, and Out-of-Band (OOB). In the method of Numerical Comparison, a set of numbers is displayed on both of the peripheral apparatus and the central apparatus, and the user needs to confirm whether the sets of numbers are consistent for the verification. In the method of Passkey Entry, a set of numbers is displayed on one of the peripheral apparatus and the central apparatus, and the user needs to correctly input the set of numbers into another apparatus for the verification. OOB means other methods, and a common practice is to move the peripheral apparatus and the central apparatus within a distance close enough for the user to do the verification through Near Field Communication (NFC). However, the existing methods of verification usually require the intervention of users, rather than being automatic, and thus they are not suitable for being implemented in the field of Internet of Things (loT) that involves a large number of apparatuses.

In view of the situation above, there is an urgent need in the art to provide an automatic and safe Bluetooth connection method.

### SUMMARY OF THE INVENTION

To solve at least the abovementioned problem, the present disclosure provides an loT system. The loT system comprises an identification information server, an application server, a gateway connected with the identification information server and the application server, and a terminal electronic device. The identification information server may be configured to generate a plurality of pieces of first identification information, wherein each piece of first identification information has an expiration period. The gateway may store the plurality of pieces of first identification information, and may be configured to automatically determine a piece of valid identification information from the plurality of pieces of first identification information. The terminal electronic device may store the plurality of pieces of first identification information, and may be configured to automatically and successively select a piece of current identification information from the plurality of pieces of first identification information to establish a connection with the gateway. When the piece of current identification information is consistent with the piece of valid identification information, the gateway may establish the connection with the terminal electronic device.

To solve at least the abovementioned problem, the present disclosure also provides a connection setting method for an loT system. The connection setting method may comprise steps as follows:
generating, by an identification information server, a plurality of pieces of first identification information, each piece of first identification information having an expiration period;
determining automatically, by a gateway, a valid identification information from the plurality of pieces of first identification information; and
automatically and successively selecting, by a terminal electronic device, a piece of current identification information from the plurality of pieces of first identification information to establish a connection with the gateway, wherein the gateway establishes the connection with the terminal electronic device when the piece of current identification information is consistent with the piece of valid identification information.

As described above, since both the terminal electronic device and the gateway of the present disclosure store the plurality of pieces of identification information for connection setting, the terminal electronic device may be configured to automatically and successively attempt connecting to the gateway via the plurality of pieces of identification information after startup, and the user of the terminal electronic device is not required to manually configure the connection, thereby improving the connection efficiency (i.e., an automatic connection is implemented). In addition, each piece of identification information used in the connection between the terminal electronic device and the gateway of the present disclosure is time-sensitive, so the problem of easy cracking due to the use of the same identification information for a long period of time for connection can be avoided. Therefore, the connection security between the terminal electronic device and the gateway can be enhanced.

This summary overall describes the core concept of the present invention and covers the problem to be solved, the means to solve the problem and the effect of the present invention to provide a basic understanding of the present invention by those of ordinary skill in the art. However, it shall be appreciated that, this summary is not intended to encompass all embodiments of the present invention but is provided only to present the core concept of the present invention in a simple form and as an introduction to the following detailed description. The detailed technology and preferred embodiments implemented for the subject invention are described in the following paragraphs accompanying the appended drawings for people having ordinary skills in the art to well appreciate the features of the claimed invention.

### BRIEF DESCRIPTION OF DRAWINGS

**FIG. 1** depicts a schematic view of an loT system according to one or more embodiments of the present disclosure;
**FIGS. 2A-2G** depict schematic views of the connection setting of the loT system according to one or more embodiments of the present disclosure;
**FIGS. 3A-3B** depict schematic views of the operations of the loT system according to one or more embodiments of the present disclosure;
**FIG. 4** depicts a schematic view of the IoT system handling connection errors for the terminal electronic device according to one or more embodiments of the present disclosure;
**FIG. 5** depicts a schematic view of the IoT system handling connection errors for the gateway according to one or more embodiments of the present disclosure;
**FIG. 6** depicts a schematic view of the terminal electronic device being installed in the wired connection manners in the loT system according to one or more embodiments of the present disclosure;
**FIG. 7** depicts a schematic view of two devices of the loT system performing transactions using the identification information as a token according to one or more embodiments of the present disclosure; and
**FIG. 8** depicts a connection setting method according to one or more embodiments of the present disclosure.

### DETAILED DESCRIPTION OF THE INVENTION

The embodiments described in the following description are not intended to limit the present invention to any environment, applications, or implementations described in these embodiments. It should be appreciated that, in the following embodiments and the attached drawings, elements unrelated to the present invention are omitted from depiction. In addition, dimensions of and dimensional scales among individual elements in the attached drawings are provided only for illustration, but not to limit the scope of the present invention. Moreover, the same (or similar) reference numerals may correspond to the same (or similar) elements. In the following description, unless otherwise specified.

The terms used herein are for the purpose of describing the embodiments only and are not intended to limit the invention. The singular form "a" is intended to include the plural form as well, unless the context clearly dictates otherwise. The terms "comprise", "include" and the like designate the existence of the roles, integers, steps, operations and/or elements, but do not exclude the existence or addition of one or more other roles, integers, steps, operations, elements and/or combinations thereof. The term "and/or" includes any and all combinations of one or more of the associated listed items. Although the terms "first", "second", "third", etc. may be used herein to describe various elements, these elements should not be limited by these terms. These terms are only used to distinguish one element from another. Thus, for example, a first element described below could also be referred to as a second element without departing from the spirit and scope of the present invention.

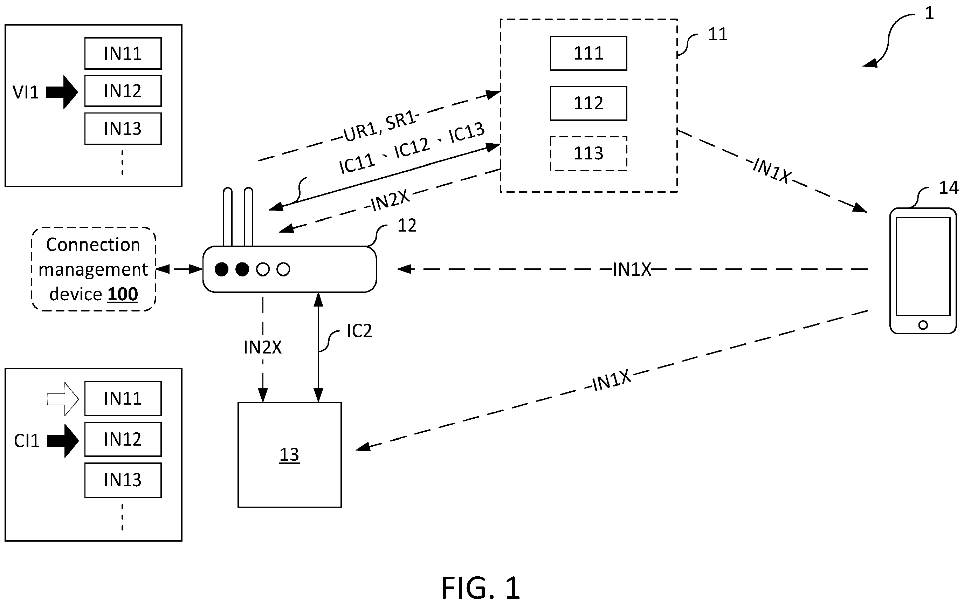

**FIG. 1** depicts a schematic view of an loT system according to one or more embodiments of the present disclosure. The contents shown in **FIG. 1** are only for easily illustrating the embodiments, instead of limiting the scope of the present disclosure. Referring to **FIG. 1****,** an IoT system **1** may comprise a device management server (DMS) **111,** an identification information server **112,** an application server **113,** a gateway **12** and a terminal electronic device **13.**

The device management server **111** may be configured to manage various devices in the loT system and maintain relevant information of each device. The identification information server **112** may be configured to generate and manage identification information required for connection between various devices in the loT system. The application server **113** may be configured to manage application data generated, received, and/or used by various devices in the loT system when operating and providing services (e.g., IoT-enabled medical equipment). Each server may have a stable connection with others so as to communicate with each other.

In some embodiments, the device management server **111,** the identification information server **112,** and the application server **113** may be integrated into a single server **11** as a device management module, an identification information management module, and an application information module therein, respectively, and still perform their original functions respective. There may be a wired or wireless connection **IC11** between the device management server **111** and the gateway **12.** There may be a wired or wireless connection **IC12** between the identification information server **112** and the gateway **12.** There may be a wired or wireless connection **IC13** between the application server **113** and the gateway **12.**

The gateway **12** may be a computing device with the information transfer and/or protocol conversion functions of common network gateways. In the loT system 1, there may be a plurality of gateways **12,** and each gateway **12** may process the loT information flow of a plurality of terminal electronic devices **13** in different locations.

The terminal electronic device **13** may be various smart home appliances, and may also be network-connected precision instruments, medical instruments, or other electronic devices. The terminal electronic device **13** may be connected with the gateway **12** and thus indirectly connected to the server **11** through the gateway **12,** thereby achieving the effect of loT.

In some embodiments, the loT system **1** may further comprise a computing device **14,** which may be a device with computing capabilities, such as but not limited to a portable communication device, a computer, a wearable smart device, etc. The computing device **14** and the server **11** are connected with each other through a secure connection mechanism. The computing device **14** may be provided with a connection setting application for assisting the connection setting of the terminal electronic device **13** and/or the gateway **12.**

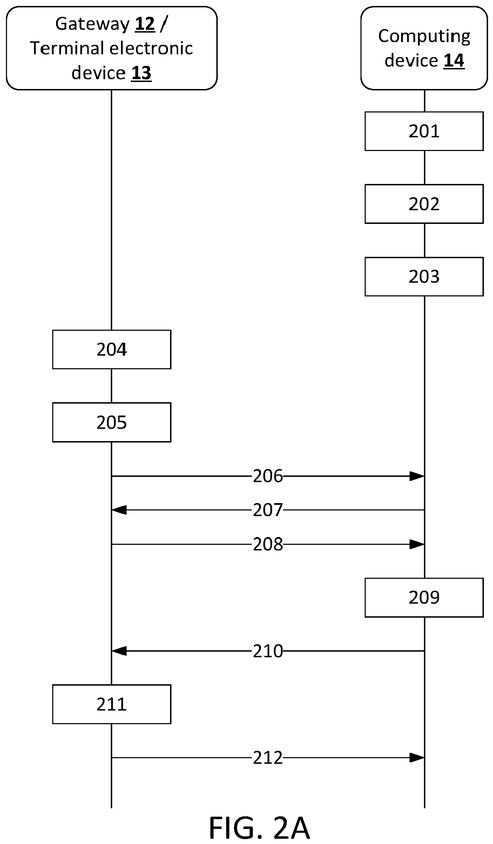

**FIGS. 2A-2G** depict schematic views of the connection setting of the loT system according to one or more embodiments of the present disclosure. The contents shown in **FIGS. 2A-2G** are only for easily illustrating the embodiments, instead of limiting the scope of the present disclosure. Please refer to **FIG. 2A** first. The initialization setting of connection of the gateway **12** and/or the terminal electronic device **13** in the IoT system **1** may start from the setting of the identification information. When the gateway **12** or the terminal electronic device **13** is to perform the initialization setting of connection in the loT system **1,** the computing device **14** may activate the access point (AP) mode (i.e., action **201)** based on a preset piece of identification information (e.g., an identifier (SSID) and a corresponding password for setting up the wireless network connection), and wait for the access of the other device (i.e., action **202).**

In addition, the computing device **14** may obtain an identification information set **IN1X** that comprises a plurality of pieces of identification information **IN11, IN12, IN13,** etc. from the identification information server **112** (i.e., action **203).** Specifically, the identification information server **112** may be configured to generate the identification information set **IN1X.** In some embodiments, the identification information server **112** may generate the identification information set **IN1X** by a hashing process, so that each piece of identification information is represented by a hash value. It should be noted that the action **203** may be executed following the completion of the action **201** or the action **202,** or may be executed following the completion of the action **209** (i.e., determining the validity of the accessing device). Furthermore, in some other embodiments, the action **203** may be replaced with that the computing device **14** generates the identification information set **IN1X** by itself.

Each piece of identification information in the set of identification information **IN1X** may be a set of account ID and passwords, a set of public and private keys, a set of secret keys, or one or more pieces of data that may be used to allow one party to identify the legitimacy of the other party. In addition, each piece of identification information in the identification information set **IN1X** may have an expiration period, that is, each piece of identification information may have a valid state and an invalid state. The expiration period may be in seconds, minutes, hours, days, weeks, months, quarters, or years. The lengths of the expiration period of the identification information in the identification information set **IN1X** may be exactly the same, partially the same, or completely different. For example, on the first day, the first piece of identification information **IN11** is valid, while the second piece of identification information **IN12** and the third piece of identification information **IN13** are invalid; on the second day, the first piece of identification information **IN11** becomes invalid, the second piece of identification information **IN12** becomes valid, and the third piece of identification information **IN13** is still invalid; and on the third day, the first piece of identification information **IN11** is still invalid, the second piece of identification information **IN12** becomes invalid, and the third piece of identification information **IN13** becomes valid. For another example, in the first week, the three pieces of identification information **IN11, IN12,** and **IN13** are all valid; in the second week, the three pieces of identification information **IN11, IN12,** and **IN13** all become invalid; and in the third week, the three pieces of identification information **IN11, IN12,** and **IN13** all become valid again. For another example, on the first day, the first piece of identification information **IN11** is valid, while the second piece of identification information **IN12** and the third piece of identification information **IN13** are invalid; from the second to the fourth day, the first piece of identification information **IN11** becomes invalid, the second piece of identification information **IN12** becomes valid, and the third piece of identification information **IN13** remains invalid; and from the fourth to the fifth day, the first piece of identification information **IN11** remains invalid, the second piece of identification information **IN12** becomes invalid, and the third piece of identification information **IN13** becomes valid.

In some embodiments, the identification information server **112** or the computing device **14** may create a configuration file, and define, in the configuration file, the expiration period of each identification information in the identification information set **IN1X.** The target equipment (e.g., the gateway **12** or the terminal electronic device **13)** may check when the identification information needs to be changed after the configuration file is installed and/or executed.

When the gateway **12** or the terminal electronic device **13** is activated (i.e., action **204,** e.g., when the power is turned on), it may detect the computing device **14** in the AP mode by scanning the connection (i.e., action **205),** and use the same default identification information as in the computing device **14** to connect to the computing device **14** (i.e., action **206).** If the connection is successfully established, the computing device **14** may report the connection success to the gateway **12** or the terminal electronic device **13** that needs the connection setting (i.e., action **207).**

Next, the gateway **12** and/or the terminal electronic device **13** that needs the connection setting may transmit an authentication code (i.e., action **208)** to the computing device **14** for confirmation. After the computing device **14** confirms that the authentication code is correct (i.e., action **209),** the computing device **14** may transmit the identification information set **IN1X** to the gateway **12** and/or the terminal electronic device **13** (i.e., action **210)** such that the gateway **12** and/or the terminal electronic device **13** stores the identification information set **IN1X.** After obtaining the identification information set **IN1X,** the gateway **12** and/or the terminal electronic device **13** may perform the setting according to the identification information (i.e., action **211),** and report back to the computing device **14** after completion (i.e., action **212).**

In some other embodiments, the identification information set **IN1X** may be stored in the gateway **12** and the terminal electronic device **13** during the production phase of the gateway **12** and the terminal electronic device **13** (e.g., as a default setting). In some other embodiments, the identification information set **IN1X** may be stored in the gateway **12** and the terminal electronic device **13** after the gateway **12** and the terminal electronic device **13** enter the market.

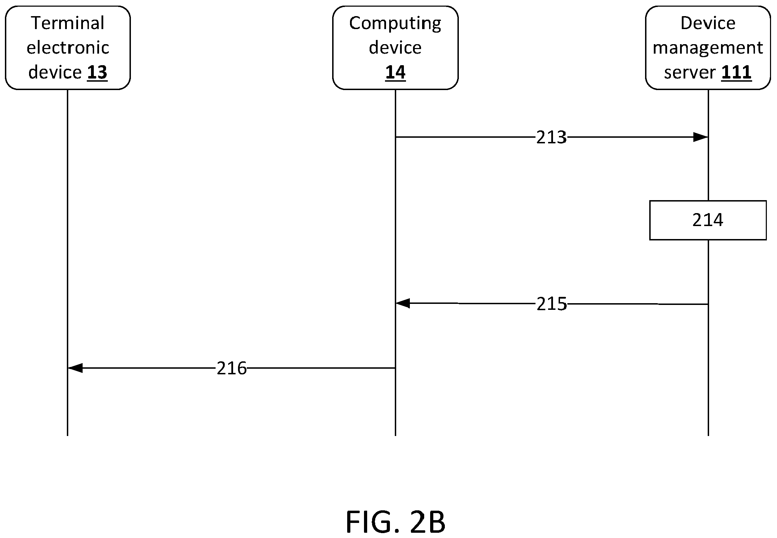

Please refer to **FIG. 2B****.** The process of device registration may be performed after completing the setting of the identification information. Specifically, if the device to be registered is the terminal electronic device **13,** the computing device **14** may report to the device management server **111,** after completing the action **212,** to register the terminal electronic device **13** (i.e., action **213).** Correspondingly, after receiving the report, the device management server **111** may start to maintain the information of the terminal electronic device **13** and set the status of the terminal electronic device **13** to "registered but not connected to the application server" (i.e., action **214).** Subsequently, the device management server **111** may reply that the computing device **14** has completed the device registration (i.e., action **215),** and accordingly, the computing device **14** may notify the terminal electronic device **13** that the connection setting has been completed (i.e., action **216).**

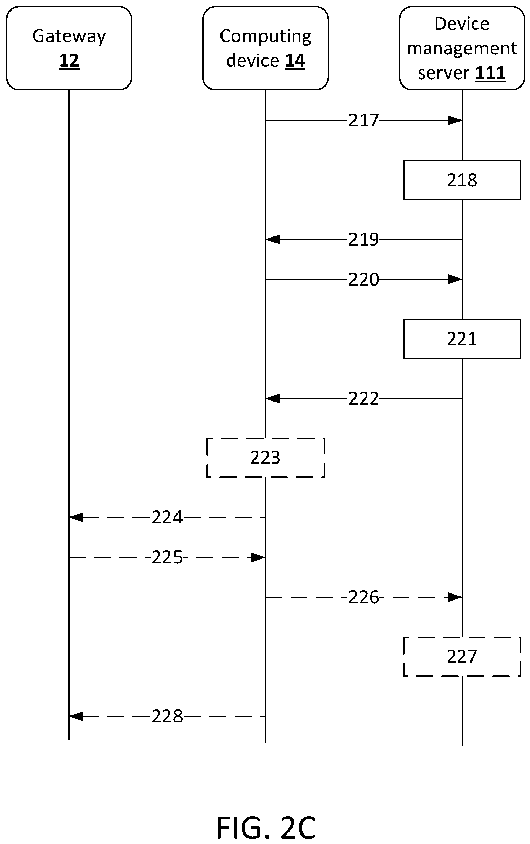

Next, refer to **FIG. 2C****.** On the other hand, if the device to be registered is the gateway **12,** after completing the action **212,** the computing device **14** may report to the device management server **111** to register the new gateway **12** (i.e., action **217).** Accordingly, after receiving the report, the device management server **111** may start to maintain the information of the gateway **12** and set the status of the gateway **12** to "registered but not connected to the application server" (i.e., action **218).** Subsequently, the device management server **111** may reply that the computing device **14** has completed the device registration (i.e., action **219).**

If the computing device **14** has the knowledge about the location of workplace (e.g., a specific hospital, store, etc.) at which the gateway **12** is to be set up, it may notify the device management server **111** of the location (i.e., action **220).** Accordingly, the device management server **111** may record the location of workplace (i.e., action **221)** and report that the computing device **14** has completed the setting (i.e., action **222).**

Additional actions **223-227** may be performed if the connection setting information in the workplace of the gateway **12** is known at this registration phase. More specifically, the computing device **14** may first obtain (e.g., via the input of the user in the connection setting application) the connection setting information of the gateway **12** in its workplace (i.e., action **223),** and provide the connection setting information to the gateway **12** (i.e., action **224).** For example, a fixed IP address may be set first if the gateway **12** needs to use a wired network connection to communicate with the application server **113** in the workplace. On the contrary, if a wireless network connection is used, the corresponding SSID and password may be set.

Subsequently, the gateway **12** may report the completion of connection setting to the computing device **14** after receiving the connection setting information corresponding to the workplace (i.e., action **225),** and the computing device **14** may report the connection configuration of the gateway **12** to the device management server **111** (i.e., action **226),** such that the device management server **111** may record the connection configuration of the gateway **12** (i.e., action **227).** Finally, computing device **14** may notify the gateway **12** that its connection setting is complete (i.e., action **228).** In some embodiments, when the device management server **111** and the application server **113** are two independent servers, the device management server **111** may share its recorded connection configuration about the gateway **12** with the application server **113** through a network connection, such that the gateway **12** may successfully connect to the application server **113** in the workplace.

During the above-mentioned phases of identification-information setting and device registration, the gateway **12** may not necessarily be in its workplace (i.e., the location where it actually works to complete the setting), but may be in other locations (e.g., the factory where the gateway **12** is produced). When the gateway **12** is in its workplace and is about to be installed, the gateway **12** may be directly connected to the server (e.g., the application server **113)** according to its connection configurations after normal startup.

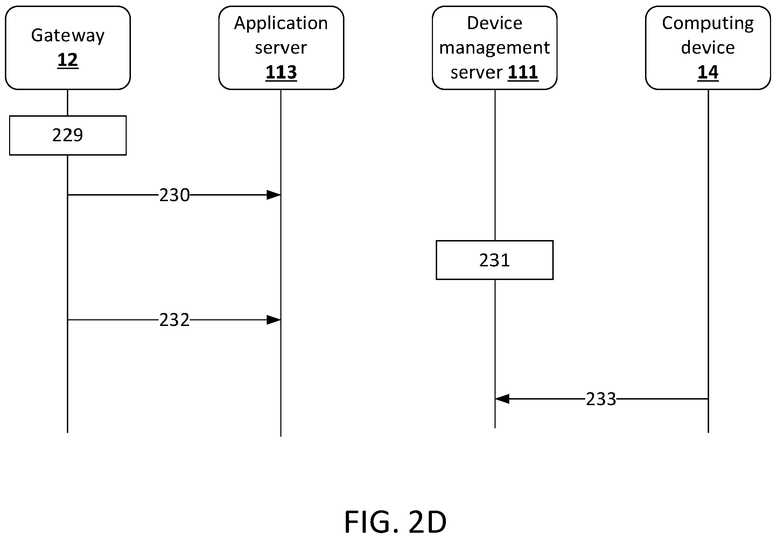

Refer to **FIG. 2D****.** For example, when the user wants to install the gateway **12** in the workplace, the gateway **12** may, first, be activated (i.e., action **229).** If the gateway **12** has completed the network configuration during the device registration phase, it will now be able to connect directly to the application server **113** (i.e., action **230).** Accordingly, the device management server **111** may change the state of the gateway **12** to "connected to the application server **113"** (i.e., action **231,** this information may be learned via its communication with the application server **113** or with the computing device **14),** and gateway **12** may begin transmitting its data to the application server **113** (i.e., action **232).** The user or device administrator may query the device management server **111** for the operating status of the gateway **12** through the computing device **14** (i.e., action **233).**

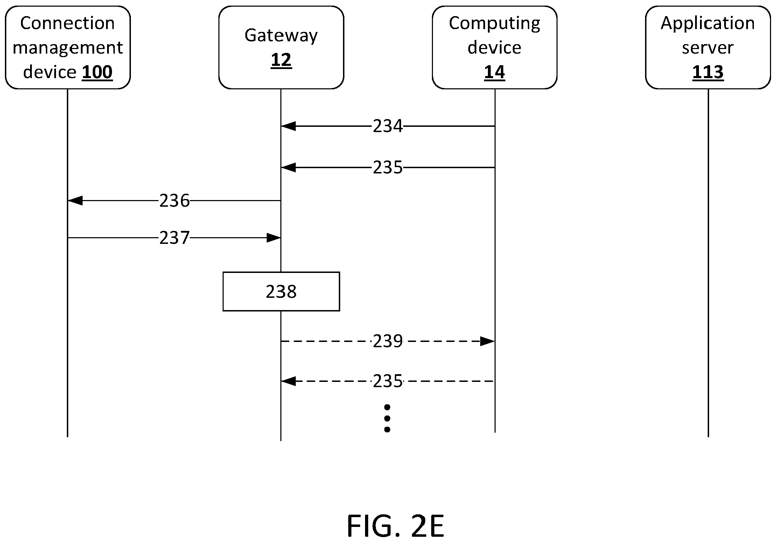

Refer to **FIG. 2E****.** On the contrary, when the connection setting information required by the gateway **12** in its workplace cannot be known during the above-mentioned registration phase, the network connection between gateway **12** and the application server **113** cannot be set up until the installation of the gateway 12 in the workplace. Specifically, at the beginning installing the gateway **12** in the workplace, the computing device **14** may first connect to the gateway **12** (i.e., action **234),** and then perform the connection setting of the gateway **12** (i.e., action **235).** A fixed IP address may be set first if the gateway **12** needs to communicate with the application server **113** in the workplace via wired network connection. On the contrary, a corresponding set of SSID and password may be set if the gateway **12** needs to communicate with the application server **113** in the workplace via a wireless network connection.

Next, the gateway **12** may request an IP address (i.e., action **236)** from a connection management device **100** as shown in **FIG. 1** (e.g., an access point (AP) device or a wired-network management device), and the connection management device **100** may assign an IP address to the gateway **12** accordingly and allow it to connect to the network of the workplace (i.e., action **237).**

The gateway **12** may then check whether the network of the workplace can be successfully connected (i.e., action **238).** In some embodiments, the gateway **12** may report to the computing device **14** when it finds out that the network of the workplace is abnormal (i.e., action **239).** After receiving the report, the computing device **14** may perform the action **235** again until the abnormal network condition is eliminated.

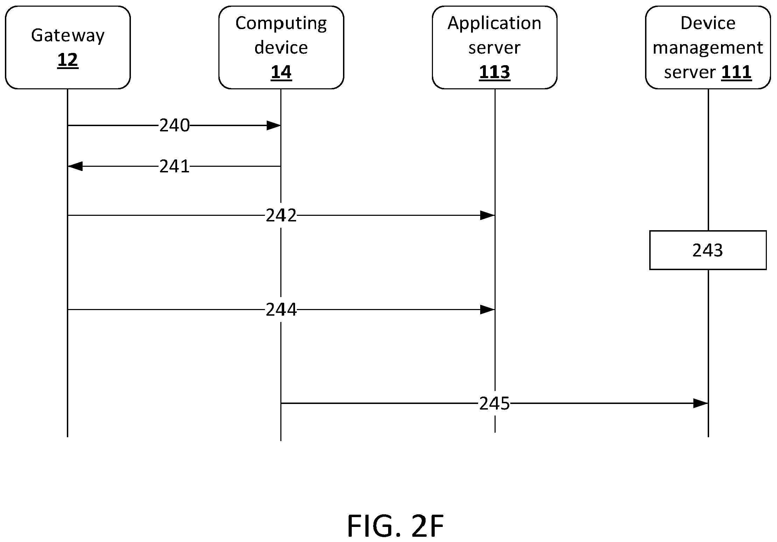

Refer to **FIG. 2F****.** When the gateway **12** determines that the network of the workplace can be properly connected, it may report to the computing device **14** that the network is normal (i.e., action **240),** and the computing device **14** may accordingly respond to the gateway **12** that its connection setting has been completed (i.e., action **241).** Then, similar to actions **230-233,** gateway **12** may connect to the application server **113** (i.e., action **242).** Accordingly, the device management server **111** may change the state of the gateway **12** to "connected to the application server **113"** (i.e., action **243),** and the gateway **12** may start transmitting its data to the application server **113** (i.e., action **244).** The user or device administrator may query the device management server **111** for the operating status of the gateway **12** through the computing device **14** (i.e., action **245).**

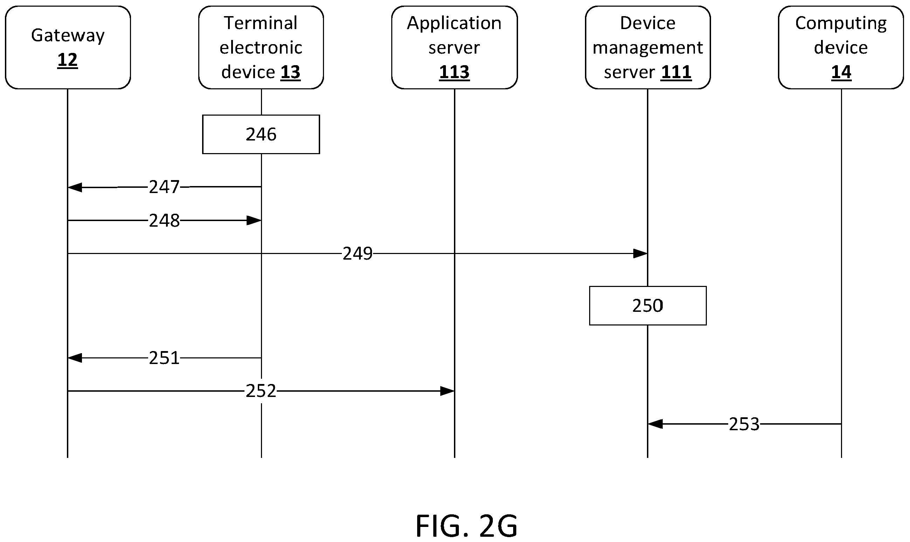

Refer to **FIG. 2G****.** The user may activate the terminal electronic device **13** first when he/she wants to install the terminal electronic device **13** in the same workplace (i.e., action **246).** The terminal electronic device **13** may automatically attempt to connect to the gateway **12** using one of the identification information in the identification information set **IN1X** stored therein (i.e., action **247),** and the gateway **12** may accordingly reply to the terminal electronic device **13** that the connection has been successfully established (i.e., action **248).** Next, the gateway **12** may notify the device management server **111** that a new device has joined the network of the workplace (i.e., action **249),** and the device management server **111** may change the status of the terminal electronic device **13** to "connected" (i.e., action **250).**

After being successfully connected with the gateway **12,** the terminal electronic device may begin its data transmission to the gateway **12** (i.e., action **251),** and the gateway **12** may further forward the data transmitted by the terminal electronic device **13** to the application server **113** (i.e., action **252).** Finally, similar to the actions **233** and **245,** the user or the device administrator may query the device management server **111** for the operation status of the terminal electronic device **13** through the computing device **14** (i.e., action **253).**

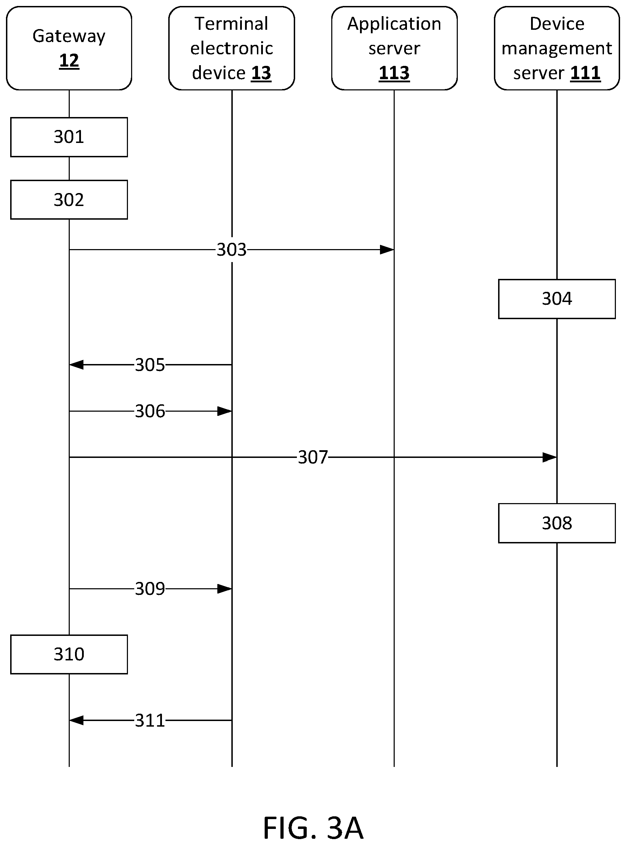

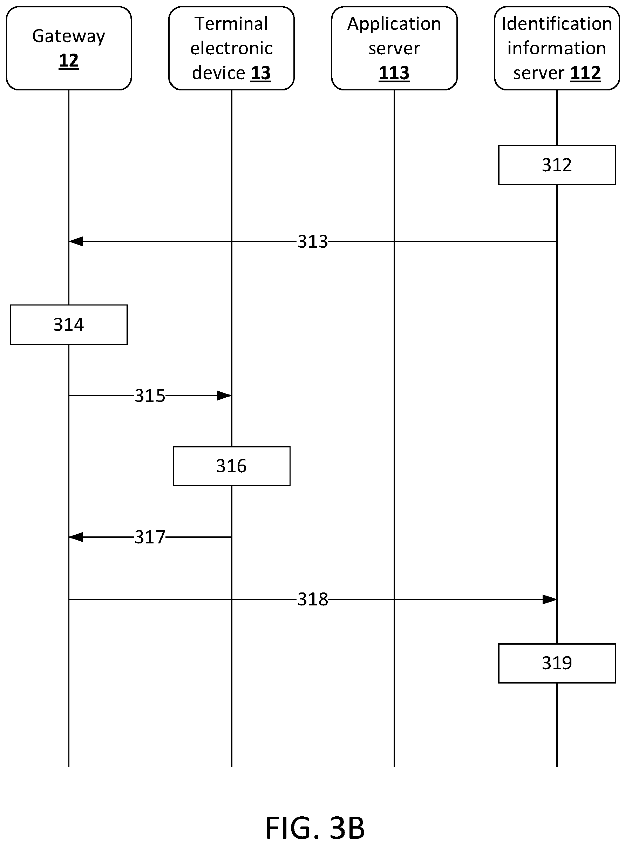

**FIGS. 3A-3B** depict schematic views of the operations of the loT system according to one or more embodiments of the present disclosure. The contents shown in **FIGS. 3A-3B** are only for easily illustrating the embodiments, instead of limiting the scope of the present disclosure. Please refer to **FIGS. 3A-3B** together. After completing the connection setting and on-site installation of the gateway **12** and the terminal electronic device **13,** first, in action **301,** the gateway **12** may determine a piece of valid identification information **VI1** from the stored identification information set **IN1X** after being activated (i.e., selecting a certain piece of identification information in a valid state), and enable the access point mode according to the valid identification information **VI1** (i.e., action **302).** Gateway **12** may also be connected to the application server **113** (i.e., action **303),** and device management server **111** may change the state of gateway **12** to "connected to application server" (i.e., action **304).**

On the other hand, the terminal electronic device **13** may automatically and successively select a piece of identification information from the stored identification information set **IN1X** as current identification information **CI1** after being activated, and attempt to establish a connection **IC2** with the gateway **12** according to the current identification information **CI1** (i.e., action **305).** The connection to **IC2** may be successfully established when the current identification information **CI1** selected by the terminal electronic device **13** is consistent with the valid identification information **VI1** determined by the gateway **12** (e.g., the valid identification information **VI1** and the current identification information **CI1** are both the identification information **IN12).**

When the current identification information **CI1** does not match the valid identification information **VI1** (e.g., the valid identification information **VI1** is the identification information **IN12,** but the current identification information **CI1** is the identification information **IN11),** the terminal electronic device **13** may automatically select another piece of identification information (e.g., identification information **IN12,** or identification information **IN13)** from the identification information set **IN1X** as the current identification information **CI1**, until the connection **IC2** with the gateway **12** is successfully established. Through this mechanism, the terminal electronic device **13** may be automatically connected to the gateway **12** when it is activated, without the need for manual settings by the user, thereby achieving a real-time network connection setting between the terminal electronic device **13** and the gateway **12** and thus improving the connection efficiency.

Since each identification information in the identification information set **IN1X** is time-sensitive, in some embodiments, the terminal electronic device **13** may be configured to select the current identification information **C1** only from the identification information in a valid state, so as to reduce the number of attempts.

When the terminal electronic device **13** successfully establishes the connection **IC2** with the gateway **12,** the gateway **12** may reply that the terminal electronic device **13** has been successfully connected (i.e., action **306),** and may notify the device management server **111** via the connection **IC11** that the terminal electronic device **13** is connected (i.e., action **307).** The device management server **111** may change the status of the terminal electronic device **13** to "connected" (i.e., action **308).**

In some embodiments, each piece of identification information in the identification information set **IN1X** may be an SSID and a corresponding password for setting a wireless network connection. In other words, the gateway **12** may set the connection according to the SSID and the corresponding password, and the terminal electronic device **13** selects a set of SSID and password from the identification information set **IN1X** for attempting to establish the connection **IC2** with the gateway **12.** The format of the SSID and password may be English letters, numbers, symbols and so on. Due to the wide variety of options of character content, there is little chance that a same set of SSID and password are adopted.

When the valid identification information **VI1** (e.g., identification information **IN12)** has expired (i.e., switching from the valid state to the invalid state), the gateway **12** may notify the terminal electronic device **13** that the identification information to use is going to be replaced (i.e., action **309),** and then determine another piece of identification information (e.g., identification information **IN13)** that is in a valid state from the identification information set **IN1X** as the valid identification information **VI1** (i.e., action **310).** That is to say, the gateway **12** may determine the valid identification information **VI1** according to the expiration period of each piece of identification information in the identification information set **IN1X,** so as to strengthen the connection security.

Correspondingly, in the terminal electronic device **13,** when the current identification information **CI1** (e.g., the identification information **IN12)** has expired or the connection **IC2** fails due to the gateway **12** changing the valid identification information **VI1**, the terminal electronic device **13** may automatically and successively select other identification information (e.g., identification information **IN13** ) from the identification information set **IN1X** as the current identification information **CI1** until the connection **IC2** is re-established (i.e., action **311).**

In some embodiments, the identification information in the identification information set **IN1X** may have an order. Moreover, in some embodiments, the identification information may alternately present a valid state according to the order. For example, the identification information in the first place may be in a valid state first, and the remaining identification information may turn into the valid state by turns according to the order, and then turn back to an invalid state after its expiration period has passed. With this mechanism, both the gateway **12** and the terminal electronic device **13** may adopt, in turn and according to the order, each identification information in the valid state in the identification information set **IN1X** for connection setting.

In some embodiments, each piece of identification information in the identification information set **IN1X** may not only be an SSID and the corresponding password for setting up a wireless network connection, but the identification information may also have an order. Under such circumstances, each identification information in the identification information set **IN1X** may be as shown in Table 1 below:

**<Table 1>**

| Order | ID | Password | Expiration Period (Day) |
|---|---|---|---|
| 1 | ID0134 | ytr367y6 | 3 |
| 2 | ID0528 | 580dn243 | 3 |
| 3 | ID0729 | 0673hd03 | 3 |
| 4 | ID5568 | 0k39g7ba | 3 |

When determining that it is necessary to replace the identification information set (e.g., more than half of the identification information in the current identification information set has been used, or upon receipt of an updating request **UR1** from an external device such as the gateway **12),** the identification information server **112** may generate identification information set **IN2X** containing multiple pieces of identification information (i.e., action **312),** and transmit the identification information set **IN2X** to the gateway **12** (i.e., action **313).**

In some embodiments, the gateway **12** may periodically transmit the update request **UR1** to the identification information server **112,** and the period at which the gateway **12** transmits the update request **UR1** is less than the sum of expiration periods of the pieces of identification information in the identification information set **IN1X,** so as to obtain the next batch of identification information before the identification information is used up, thereby avoiding adopting the identification information that has already been used. For instance, as shown in Table 1, the gateway **12** may transmit the update request **UR1** to the server **11** every six days (i.e., half of the total expiration period).

In some embodiments, the number of pieces of identification information in the identification information set **IN2X** may be the same as the number of pieces of identification information that has been used in the identification information set **IN1X** (e.g., half the number of pieces of identification information in the identification information set **IN1X).** The gateway **12** may update the pieces of identification information used accordingly after receiving the identification information set **IN2X** (i.e., action **314).** For example, the gateway **12** may only use the identification information set **IN2X** to replace the used identification information instead of completely replacing the identification information set **IN1X** when the number of pieces of identification information in the identification information set **IN2X** is less than the identification information set **IN1X.**

In addition, since there is a connection **IC2** between the gateway **12** and the terminal electronic device **13,** the gateway **12** may also transmit the identification information set **IN2X** or its updated pieces of identification information to the terminal electronic device **13,** and notify it to update the identification information therein (i.e., action **315).** Then, the terminal electronic device **13** may update the used identification information based on the identification information set **IN2X** (i.e., action **316).** For example, the terminal electronic device **13** may only use the identification information set **IN2X** to replace the used identification information, or may directly replace the identification information set **IN1X** therein with the plurality of pieces of identification information updated by the gateway **12.** With this mechanism, the identification information for setting the connection **IC2** may be continuously and periodically replaced, so as to avoid reusing the same identification information as much as possible.

When the terminal electronic device **13** completes the update of the identification information, it may notify the gateway **12** (i.e., action **317),** and the gateway **12** may transmit the updated identification information to the identification information server **112,** and notify it to update the identification information therein (i.e., action **318).** The identification information server **112** may record the plurality of identification information updated by the gateway **12** (i.e., action **319).**

In some embodiments, the gateway **12** may also periodically transmit a status report **SR1** to the device management server **111** to report the operating status of the gateway **12** and the terminal electronic device **13.**

In some embodiments, the gateway **12** may also be used to detect cyberattacks (e.g., distributed denial of service, DDoS) launched by one or more external devices against the gateway **12** , and may issue corresponding alerts based on the detected cyberattack. For example, the gateway **12** may transmit a warning message of cyberattack to the terminal electronic device **13** and the device management server **111.** Alternatively, the gateway **12** may comprise a speaker and/or an indicator light. An alarm sound coming from the speaker and/or light of the indicator light may be used to notify the user that the gateway **12** is under a cyberattack.

In response to the cyberattack detected by the gateway **12,** in some embodiments, the gateway **12** and the terminal electronic device **13** may adopt new valid identification information **VI1** and current identification information **CI1** respectively at the same time (e.g., a specific time of 0:00 AM of the next day). In response to the cyberattack detected by gateway **12,** in some other embodiments, identification information server **112** may generate another identification information set (e.g., identification information set **IN2X),** and directly (e.g., through the connection **IC12**) or indirectly (e.g., through the computing device **14)** transmit the other set of identification information to the gateway **12.** The gateway **12** or the computing device **14** may then transmit the other set of identification information to the terminal electronic device **13.** Through this mechanism, the gateway **12** and the terminal electronic device **13** may respond immediately when a cyberattack is detected, so as to increase the connection security of the loT system **1.**

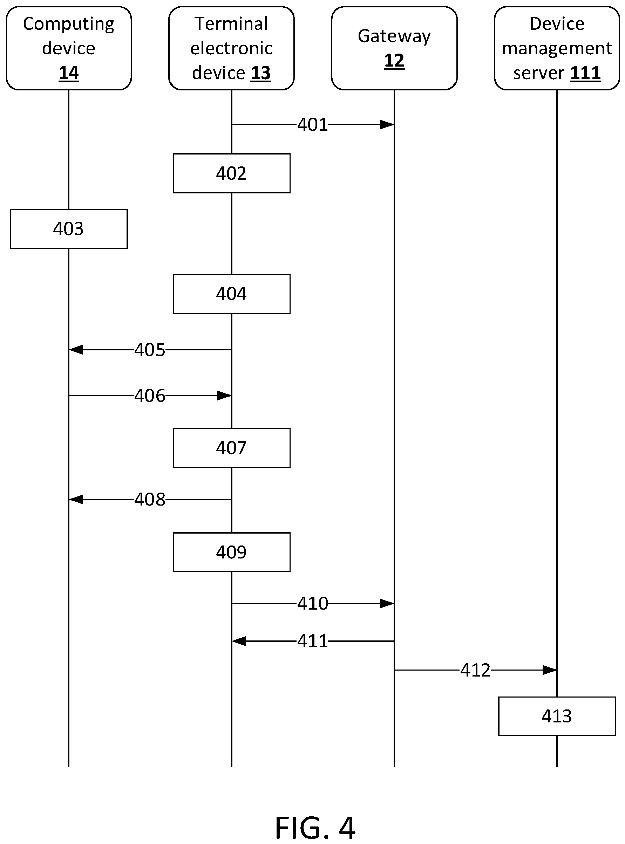

**FIG. 4** depicts a schematic view of the loT system handling connection errors for the terminal electronic device according to one or more embodiments of the present disclosure. The contents shown in **FIG. 4** are only for easily illustrating the embodiments, instead of limiting the scope of the present disclosure. Refer to **FIG. 4****.** When the terminal electronic device **13** attempts to establish a connection with the gateway **12** using its stored identification information (i.e., action **401)** but fails eventually, the terminal electronic device **13** may issue an exception alert to its user or administrator (i.e., action **402).** For example, the terminal electronic device **13** may issue an exception alert by making an alarm sound or lighting up its indication light, or issue in the form of a message through a connection (if any) with the computing device **14.** Upon receipt of the exception alert from the terminal electronic device **13,** the user or administrator may operate the computing device **14** to initiate a device setting mode (i.e., action **403).** Under the circumstance that the exception alert is issued in the form of a message, the computing device **14** may automatically initiate the device setting mode.

After issuing the exception alert, the terminal electronic device **13** may initiate a connection reset procedure (i.e., action **404).** In some embodiments, the terminal electronic device **13** may have a physical or virtual reset button, and the connection reset procedure may be activated by the user or administrator via pressing the reset button.

After starting the connection reset procedure, the terminal electronic device **13** may directly establish a connection with the computing device **14** (i.e., action **405).** The specific way of establishing the connection between the terminal electronic device **13** and the computing device **14** may be similar to the ways taught by the actions **201-202** and the actions **204-206** as shown in **FIG. 2A****,** and thus similar descriptions will not be repeated here. Subsequently, the computing device **14** may transmit a plurality of pieces of identification information (e.g., the identification information set **IN1X** or the identification information set **IN2X)** to the terminal electronic device **13** (i.e., action **406),** and the terminal electronic device **13** may perform connection settings accordingly (i.e., action **407),** and report back to computing device **14** upon completion (i.e., action **408).**

After completing the connection setting based on the plurality of pieces of identification information, the terminal electronic device **13** may be rebooted (i.e., action **409),** and attempt to establish a connection with the gateway **12** using the plurality of pieces of identification information (i.e., action **410).** When the connection is successfully established, the gateway **12** may reply that the terminal electronic device **13** is connected (i.e., action **411),** and may notify the device management server **111** about the joining of the terminal electronic device **13** (i.e., action **412).** The device management server **111** may accordingly record the status of the terminal electronic device **13** as "connected" (i.e., action **413).**

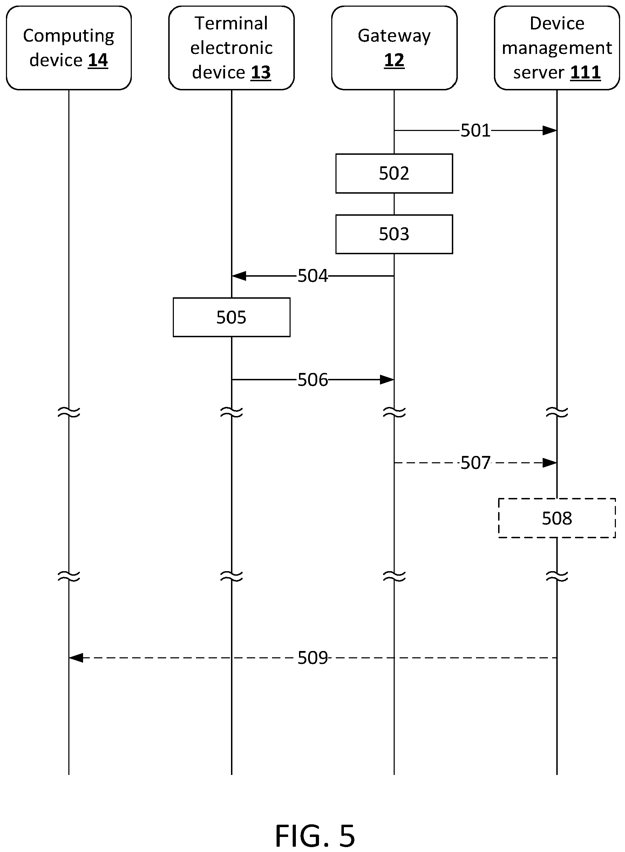

**FIG. 5** depicts a schematic view of the loT system handling connection errors for the gateway according to one or more embodiments of the present disclosure. The contents shown in **FIG. 5** are only for easily illustrating the embodiments, instead of limiting the scope of the present disclosure. Refer to **FIG. 5****.** The gateway **12** may attempt to connect to the identification information server **112** multiple times per day (i.e., action **501)** to request new identification information from it. However, certain factors may occur in the loT system **1** to cause the connection between the gateway **12** and the identification information server **112** to fail. Under such circumstances, when the gateway **12** detects that it still fails to establish a connection with the identification information server **112** after a certain period of time (e.g., more than half of the identification information has been tried out) (i.e., action **502),** it may randomly generate a plurality of pieces of new identification information, or mutate the existing pieces of identification information (i.e., action **503),** and then transmit the pieces of new identification information or the pieces of mutated identification information to the terminal electronic device **13** (i.e., action **504).** After receiving the pieces of new identification information, the terminal electronic device **13** may perform connection setting accordingly (i.e., action **505),** and report back to the gateway **12** upon completion (i.e., action **506).**

If the specific factor causing the failure of the connection between the gateway **12** and the identification information server **112** has been eliminated, and the connection has returned, the gateway **12** may report to the identification information server **112** the plurality of pieces of new identification information that it generated or the mutations it made to the original identification information (i.e., action **507).** The identification information server **112** may accordingly update the identification information it records for use by the gateway **12** (i.e., action **508).**

When the connection between the gateway **12** and the identification information server **112** has been down for more than a specified period, the identification information server **112** may notify the computing device **14** of such a situation (i.e., action **509).**

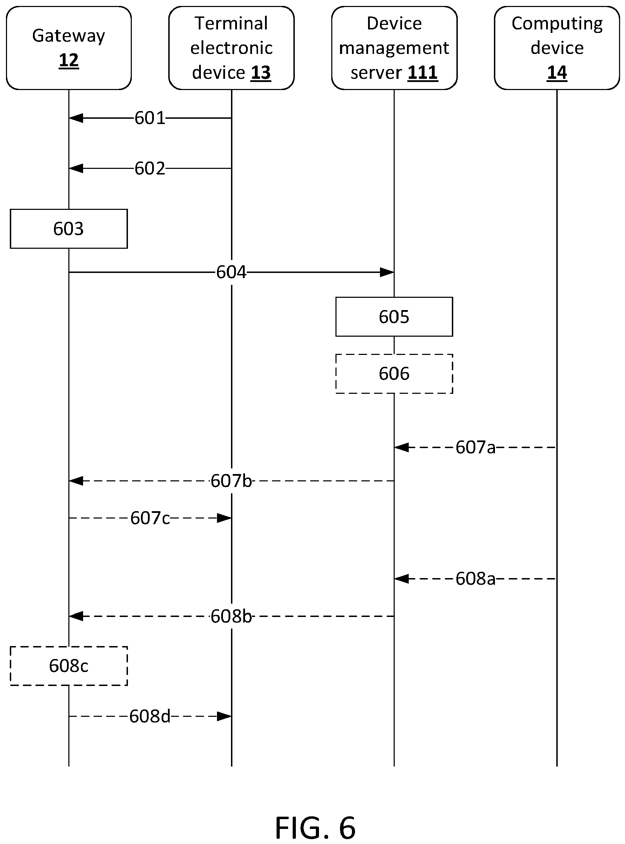

**FIG. 6** depicts a schematic view of the terminal electronic device being installed in the wired connection manners in the loT system according to one or more embodiments of the present disclosure. The contents shown in **FIG. 6** are only for easily illustrating the embodiments, instead of limiting the scope of the present disclosure. Refer to **FIG. 6****.** In some other embodiments, the terminal electronic device **13** may attempt to connect to the gateway **12** in the form of a wired connection during the installation phase in its workplace (i.e., action **601).** The terminal electronic device **13** may request an IP address from the Dynamic Host Configuration Protocol (DHCP) of the gateway **12** (i.e., action **602).**

When a new device (i.e., the terminal electronic device **13)** to be connected in a wired manner is found (i.e., action 603), the gateway **12** may notify the device management server **111** (i.e., action 604), and the device management server **111** may then check whether the terminal electronic device **13** is a registered device (i.e., action **605).**

When the device management server **111** determines that the terminal electronic device **13** has not been registered, it may associate the terminal electronic device **13** with the gateway **12** in its record and list the terminal electronic device **13** as an unregistered device (i.e., action **606).** Different processing will then be performed according to whether the terminal electronic device **13** is a legitimate device.

When determining that the terminal electronic device **13** is a legitimate device, the user or the administrator may notify the device management server **111** through the computing device **14** to redefine the terminal electronic device **13** as a legally registered device (i.e., action **607a),** and the device management server **111** may notify the gateway **12** that the terminal electronic device **13** is a legitimate device (i.e., action **607b).** After receiving the notification, the gateway **12** may accordingly assign an IP address to the terminal electronic device **13** and allow the connection of the terminal electronic device **13** (i.e., action **607c).**

Conversely, actions **608a, 608b, 608c,** and **608d** may be performed instead of actions **607a, 607b,** and **607c.** Specifically, when determining that the terminal electronic device **13** is an illegal device, the user or the administrator may notify the device management server **111** via the computing device **14** to list the terminal electronic device **13** as an illegally registered device (i.e., action **608a).** The device management server **111** may then notify the gateway **12** that the terminal electronic device **13** is an illegal device (i.e., action **608b).** After receiving the notification, the gateway **12** may add the terminal electronic device **13** to a blacklist accordingly (i.e., action **608c),** refuse to assign an IP address to it and refuse its connection, and notify the terminal electronic device **13** (i.e., action **608d)** of the same.

On the other hand, actions **606** and **607a** may be omitted and actions **607b** and **607c** may be performed directly when the device management server **111** determines that the terminal electronic device **13** is a registered device, since a registered device is, of course, a legitimate device.

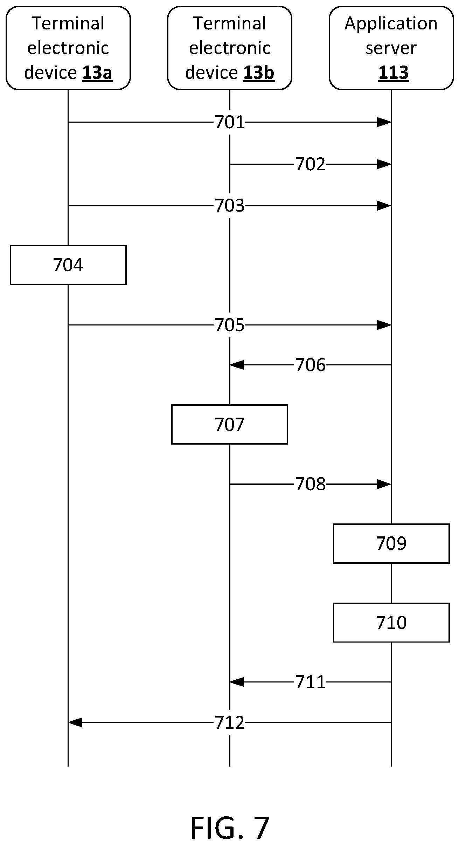

**FIG. 7** depicts a schematic view of two devices of the loT system performing transactions using the identification information as a token according to one or more embodiments of the present disclosure. The contents shown in **FIG. 7** are only for easily illustrating the embodiments, instead of limiting the scope of the present disclosure. Refer to **FIG. 7****.** In some embodiments, since each device in the loT system of the present disclosure will periodically update the identification information, the two devices that have been installed in the loT system **1** may use the identification information stored therein as tokens for identity authentication and transaction credentials. For convenience of description, it is assumed that there are two installed terminal electronic devices **13a** and **13b** in the loT system **1,** and the terminal electronic devices **13a** and **13b** are substantially the same as the terminal electronic devices **13.**

First, the terminal electronic device **13a** and the terminal electronic device **13b** may each be connected to the application server **113** (i.e., action **701** and action **702).** The terminal electronic device **13a** may notify the application server **113** that it intends to conduct a transaction with the terminal electronic device **13b** (i.e., action **703),** and may use one of the identification information stored therein as a first token (i.e., action **704,** e.g., generated by hashing), and transmit the first token to the application server **113** (i.e., action **705).**

After the application server **113** learns the transaction requirements of the terminal electronic device **13a** and receives the first token, the application server **113** may request a token from the terminal electronic device **13b** accordingly (i.e., action **706).** After receiving the notification, the terminal electronic device **13b** may use a piece of identification information stored therein as a second token (i.e., action **707)** and transmit the second token to the application server **113** (i.e., action **708).**

After receiving the first token and the second token, the application server **113** may check the validities of the tokens (i.e., action **709),** and permit the terminal electronic device **13a** to conduct the transaction with the terminal electronic device **13b** after determining that the two tokens are both valid (i.e., action **710),** and notifying both parties accordingly (i.e., action **711** and action **712).**

The real-world application of the transaction process in which the identification information is used as a token may be, for example, a self-service car wash that is connected to the Internet. In this case, the terminal electronic device **13a** may be an electronic device of the user/customer, the terminal electronic device **13b** may be a service machine of the self-service car wash, and the application server **113** may be a server for managing the data of the self-service car wash. By using the identification information stored by itself as a token, the service machine may determine whether the user is qualified to use the service (for example, have a membership), and then decide whether to allow the user for accessing the relevant service.

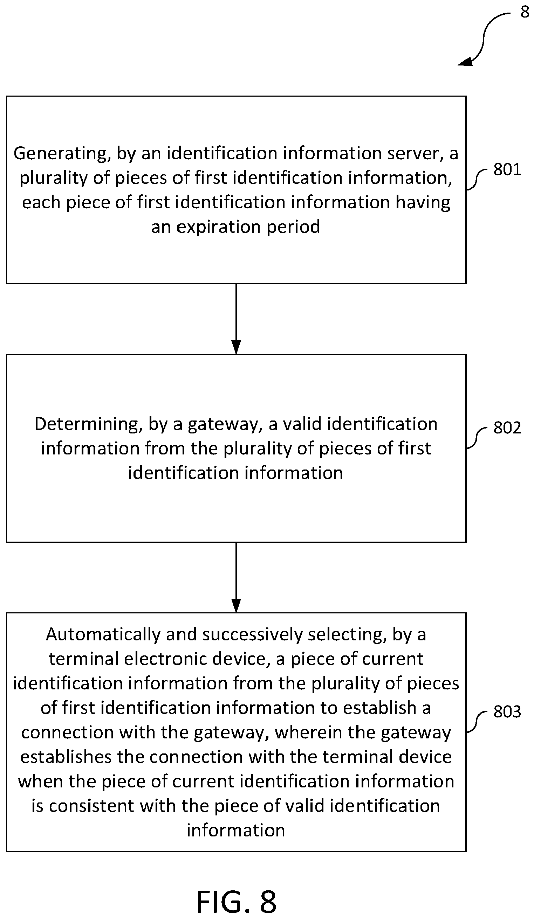

**FIG. 8** depicts a connection setting method according to one or more embodiments of the present disclosure. The contents shown in **FIG. 8** are only for easily illustrating the embodiments, instead of limiting the scope of the present disclosure. Referring to **FIG. 8****,** a connection setting method **8** for an loT system (such as but not limited to the above-mentioned loT system **1)** may include steps as follows:
generating, by an identification information server, a plurality of pieces of first identification information, each piece of first identification information having an expiration period (marked as step **801);**
determining automatically, by a gateway, a valid identification information from the plurality of pieces of first identification information (marked as step **802);** and
automatically and successively selecting, by a terminal electronic device, a piece of current identification information from the plurality of pieces of first identification information to establish a connection with the gateway, wherein the gateway establishes the connection with the terminal electronic device when the piece of current identification information is consistent with the piece of valid identification information (marked as step **803).**

In some embodiments, regarding the connection setting method **8,** the plurality of pieces of first identification information may have an order, and the gateway may automatically select the valid identification information from the plurality of pieces of first identification information according to the order. Moreover, the terminal electronic device may automatically and successively select a piece of current identification information from the plurality of pieces of first identification information according to the order.

In some embodiments, the connection setting method **8** may further comprise steps as follows:
transmitting, by the gateway, an update request to the identification information server;
generating, by the identification information server, a plurality of pieces of second identification information for replacing the plurality of pieces of first identification information according to the update request;
transmitting, by the identification information server, the plurality of pieces of second identification information to the gateway;
transmitting, by the gateway, the plurality of pieces of second identification information to the terminal electronic device;
automatically determining, by the gateway, a piece of valid identification information from the plurality of pieces of second identification information; and
automatically and successively selecting, by the terminal electronic device, a piece of current identification information from the plurality of pieces of second identification information to establish another connection with the gateway, wherein the gateway establishes the other connection with the terminal electronic device when the piece of current identification information is consistent with the piece of valid identification information. Optionally, the gateway may transmit the update request to the identification information server periodically.

In some embodiments, the connection setting method **8** may further comprise steps as follows:
generating, by the gateway, a plurality of pieces of second identification information for replacing the plurality of pieces of first identification information when the connection between the gateway and the identification information server fails; and
transmitting, by the gateway the plurality of pieces of second identification information transmitted to the terminal electronic device.

In some embodiments, the connection setting method **8** may further comprise a step as follows: reporting, by the gateway, the plurality of pieces of second identification information to the identification information server after the connection between the gateway and the identification information server is restored.

In some embodiments, the connection setting method **8** may further comprise a step as follows: transmitting periodically, by the gateway, a status report to a device management server. The status report may comprise an operating status of the gateway and an operating status of the terminal electronic device.

In some embodiments, the connection setting method **8** may further comprise steps as follows:
detecting, by the gateway, a cyberattack launched by an external device against the gateway; and
issuing, by the gateway, an alert according to the cyberattack detected.

In some embodiments, the connection setting method **8** may further comprise steps as follows:
receiving, by a computing device, the plurality of pieces of first identification information from the identification information server; and
transmitting, by the computing device, the plurality of pieces of first identification information to the gateway and the terminal electronic device.

In some embodiments, the connection setting method **8** may further comprise steps as follows:
receiving, by a computing device, a plurality of pieces of second identification information from the identification information server when the connection between the terminal electronic device and the gateway fails; and
transmitting, by the computing device, the plurality of pieces of second identification information to the terminal electronic device.

In some embodiments, the connection setting method **8** may further comprise a step as follows: registering, by a computing device, the gateway and the terminal electronic device with a device management server.

Each embodiment of the connection setting method **8** basically corresponds to a certain embodiment of the loT system **1.** Therefore, those of ordinary skill in the art may fully understand and implement all the corresponding embodiments of the connection setting method **8** simply by referring to the above descriptions of the loT system **1,** even though not all of the embodiments of the connection setting method **8** are described in detail above.

The above disclosure provides the detailed technical contents and inventive features thereof for some embodiments of the present invention. A person having ordinary skill in the art may proceed with a variety of modifications and replacements based on the disclosures and suggestions of the present invention as described above without departing from the characteristics thereof as defined in the following claims as appended.

## Claims

1. An Internet-of-Things (IoT) system (1), comprising:
an identification information server (112), configured to generate a plurality of pieces of first identification information (IN11, IN12, IN13, IN1X), wherein each piece of first identification information (IN11, IN12, IN13, IN1X) has an expiration period;
an application server (113);
a gateway (12) connected with the identification information server (112) and the application server (113) and storing the plurality of pieces of first identification information (IN11, IN12, IN13, IN1X), the gateway (12) being configured to automatically determine a piece of valid identification information (VI1) from the plurality of pieces of first identification information (IN11, IN12, IN13, IN1X); and
a terminal electronic device (13, 13a, 13b) storing the plurality of pieces of first identification information (IN11, IN12, IN13, IN1X), the terminal electronic device (13, 13a, 13b) being configured to automatically and successively select a piece of current identification information (CI1) from the plurality of pieces of first identification information (IN11, IN12, IN13, IN1X) to establish a connection (IC2) with the gateway (12), wherein when the piece of current identification information (CI1) is consistent with the piece of valid identification information (VI1), the gateway (12) establishes the connection (IC2) with the terminal electronic device (13, 13a, 13b).

2. The loT system (1) of Claim 1, wherein:
the plurality of pieces of first identification information (IN11, IN12, IN13, IN1X) have an order;
the gateway (12) automatically selects the piece of valid identification information (VI1) from the plurality of pieces of first identification information (IN11, IN12, IN13, IN1X) according to the order, and
the terminal electronic device (13, 13a, 13b) automatically and successively selects a piece of current identification information (CI1) from the plurality of pieces of first identification information (IN11, IN12, IN13, IN1X) according to the order.

3. The loT system (1) of Claim 1 or Claim 2, wherein:
the gateway (12) is further configured to transmit an update request (UR1) to the identification information server (112);
the identification information server (112) is further configured to generate a plurality of pieces of second identification information (IN2X) for replacing the plurality of pieces of first identification information (IN11, IN12, IN13, IN1X) according to the update request (UR1), and transmit the plurality of pieces of second identification information (IN2X) to the gateway (12);
the gateway (12) is further configured to:
transmit the plurality of pieces of second identification information (IN2X) to the terminal electronic device (13, 13a, 13b); and
automatically determine a piece of valid identification information (VI1) from the plurality of pieces of second identification information (IN2X); and
the terminal electronic device (13, 13a, 13b) is further configured to automatically and successively selecting a piece of current identification information (CI1) from the plurality of pieces of second identification information (IN2X) to establish another connection with the gateway (12), wherein the gateway (12) establishes the other connection with the terminal electronic device (13, 13a, 13b) when the piece of current identification information (CI1) is consistent with the piece of valid identification information (VI1).

4. The loT system (1) of Claim 3, wherein the gateway (12) transmits the update request (UR1) to the identification information server (112) periodically.

5. The loT system (1) of Claim 1 or Claim 2, wherein when a connection (IC12) between the gateway (12) and the identification information server (112) fails, the gateway (12) is further configured to generate a plurality of pieces of second identification information (IN2X) for replacing the plurality of pieces of first identification information (IN11, IN12, IN13, IN1X) and transmit the plurality of pieces of second identification information (IN2X) to the terminal electronic device (13, 13a, 13b).

6. The loT system (1) of Claim 5, wherein the gateway (12) is further configured to report the plurality of pieces of second identification information (IN2X) to the identification information server (112) after the connection (IC12) between the gateway (12) and the identification information server (112) is restored.

7. The loT system (1) of any of Claims 1-6, further comprising a device management server (111), wherein the gateway (12) is further configured to periodically transmit a status report (SR1) to the device management server (111), and the status report (SR1) comprises an operating status of the gateway (12) and an operating status of the terminal electronic device (13, 13a, 13b).

8. The loT system (1) of any of Claims 1-7, wherein the gateway (12) is further configured to detect a cyberattack launched by an external device against the gateway (12) and issue an alert according to the detected cyberattack.

9. The loT system (1) of any of Claims 1-8, further comprising a computing device (14) configured to receive the plurality of pieces of first identification information (IN11, IN12, IN13, IN1X) from the identification information server (112) and transmit the plurality of pieces of first identification information (IN11, IN12, IN13, IN1X) to the gateway (12) and the terminal electronic device (13, 13a, 13b).

10. The loT system (1) of Claim 1 or Claim 2, further comprising a computing device (14) configured to receive a plurality of pieces of second identification information (IN2X) from the identification information server (112) and transmit the plurality of pieces of second identification information (IN2X) to the terminal electronic device (13, 13a, 13b) when the connection (IC2) between the terminal electronic device (13, 13a, 13b) and the gateway (12) fails.

11. The loT system (1) of any of Claims 1-8, further comprising a computing device (14) and a device management server (111), wherein the computing device (14) is configured to register the gateway (12) and the terminal electronic device (13, 13a, 13b) with the device management server (111).

12. The loT system (1) of Claim 11, wherein the device management server (111), the identification information server (112) and the application server (113) are integrated into one single server.

13. A connection setting method (8) for an Internet of Things (IoT) system, comprising steps as follows:
generating, by an identification information server (112), a plurality of pieces of first identification information (IN11, IN12, IN13, IN1X), each piece of first identification information (IN11, IN12, IN13, IN1X) having an expiration period (801);
determining automatically, by a gateway (12), a valid identification information (VI1) from the
plurality of pieces of first identification information (IN11, IN12, IN13, IN1X) (802); and automatically and successively selecting, by a terminal electronic device (13, 13a, 13b), a piece of
current identification information (CI1) from the plurality of pieces of first identification information (IN11, IN12, IN13, IN1X) to establish a connection (IC2) with the gateway (12), wherein the gateway (12) establishes the connection (IC2) with the terminal electronic device (13, 13a, 13b) when the piece of current identification information (CI1) is consistent with the piece of valid identification information (VI1) (803).

14. The connection setting method (8) of Claim 13, wherein:
the plurality of pieces of first identification information (IN11, IN12, IN13, IN1X) have an order;
the gateway (12) automatically selects the valid identification information (VI1) from the plurality of pieces of first identification information (IN11, IN12, IN13, IN1X) according to the order, and
the terminal electronic device (13, 13a, 13b) automatically and successively selects a piece of current identification information (CI1) from the plurality of pieces of first identification information (IN11, IN12, IN13, IN1X) according to the order.

15. The connection setting method (8) of Claim 13 or Claim 14, further comprising:
transmitting, by the gateway (12), an update request (UR1) to the identification information server (112);
generating, by the identification information server (112), a plurality of pieces of second identification information (IN2X) for replacing the plurality of pieces of first identification information (IN11, IN12, IN13, IN1X) according to the update request (UR1);
transmitting, by the identification information server (112), the plurality of pieces of second identification information (IN2X) to the gateway (12);
transmitting, by the gateway (12), the plurality of pieces of second identification information (IN2X) to the terminal electronic device (13, 13a, 13b);
automatically determining, by the gateway (12), a piece of valid identification information (VI1) from the plurality of pieces of second identification information (IN2X); and
automatically and successively selecting, by the terminal electronic device (13, 13a, 13b), a piece of current identification information (CI1) from the plurality of pieces of second identification information (IN2X) to establish another connection with the gateway (12), wherein the gateway (12) establishes the other connection with the terminal electronic device (13, 13a, 13b) when the piece of current identification information (CI1) is consistent with the piece of valid identification information (VI1).
